# EUROPEAN PATENT APPLICATION

(11) **EP 2 116 933 A1**
(43) Date of publication of application: **11.11.2009**
(21) Application number: 08169235.2
(22) Date of filing: 17.11.2008
(51) Int. Cl.: G06F 9/44, H04M 1/725

(54) **Apparatuses and methods for storage and management of one or more data files containing a device theme**

(30) Priority: 09.05.2008 US 52033 P
(71) Applicant: Research In Motion Limited, Waterloo, Ontario N2L 3W8 (CA)
(72) Inventor: Billard, Christopher Dale, Mississauga Ontario L4W 0B5 (CA); Whatmough, Kenneth John, Georgetown Ontario L7G 6G3 (CA); Hayman, John Paul, Mississauga Ontario L4W 0B5 (CA)
(74) Representative: MERH-IP Matias Erny Reichl Hoffmann

(57) **Abstract**

Apparatuses and methods for storage and management of one or more data files containing a device theme are provided. In one embodiment, an electronic device comprising a processor that controls a display is configured to generate one or more themes on the display. The electronic device is configured to maintain a locale setting identifying, for example, a language setting. The electronic device is provided with a theme data file that includes conditional definitions that correspond to automatic adjustments to how the theme is generated based on the locale setting.

## Description

The present disclosure relates generally to apparatuses and methods for storage and management of one or more data files containing a device theme.

Screen size and shape vary significantly between portable electronic devices. In addition, devices often use interface themes that impact generation of different screen elements. Screen elements such as status indicators, icons and lists, for example, are generated in a different manner depending on the device or the individual locale or language activated within the device. As a result, there are challenges in designing a data records containing a device theme using a single file. The challenges are exacerbated by the need to provide different languages and locales for each theme. The challenges are typically addressed by simply using multiple files rather than single files, or providing reduced functionality within a single file. The multiplicity of files can hamper efficient use of device processing and memory resources. It is therefore desirable to improve data records containing device themes.

### GENERAL

An aspect of the specification may provide a method for managing a data file containing a device theme comprising:
providing a plurality of theme data files each corresponding to a different device theme; receiving data representing an active one of a plurality of property settings in said device; receiving theme data corresponding to one of said theme data files; said theme data including conditional definitions corresponding to one or more of said property settings; said theme data further including theme elements corresponding to said property settings; selecting theme elements from said theme data based on said conditional definitions and
said data representing said active one of said property settings; and,
generating a theme respective to said selected the data file on a display of said device based on said selected theme elements.

The theme elements can comprise at least one of text data and icon data. The text data can include at least one of time and date. The icon data can include a signal strength indicator.

The method can further comprise determining if said active one of a plurality of property settings has changed and thereafter repeating said receiving said data, receiving said theme data, selecting said theme elements and generating said theme.

The method can further comprise determining if said one of said theme data files has changed and thereafter repeating said receiving said data, receiving said theme data, selecting said theme elements and generating said theme corresponding to said one of said theme data files.

The property settings can be based on locale.

The property settings can be based on a font size.

The theme data can specify one or more of a location, size and orientation of each of said theme elements.

Another aspect of the specification may provide an electronic device comprising non-volatile storage configured to maintain: i) a plurality of theme data files; ii) theme data representing each of said theme data files; each of said theme data files corresponding to one or more property settings; iii) each of said theme data files containing theme data, including conditional definitions corresponding to one or more of said property settings; said theme data further including theme elements corresponding to said property settings. The device may also comprise a processor connected to said non-volatile storage. The processor may be configured to select theme elements from said theme data corresponding to a selected one of said theme data files. The selected theme data file may be based on said conditional definitions and the data representing said active one of said property settings. The device may also comprise a display connected to said processor. The processor may be further configured to generate a theme corresponding to said selected theme data file on said display based on said selected theme elements.

Aspects of the present specification may provide the ability to define or check device properties during generation of a theme in conjunction with examination of the theme definition as maintained in a device theme data file. The device theme generation application may be configured so that it is possible to determine the locale that is active in the device when the theme is applied. Each element in the theme definition can be configured to be used only in certain conditions, such as when a given property is set, or only when a given property is not set, or all the time. This configuration of the theme definition may make it is possible to selectively use certain parts of the theme and the prescription of all of the layouts necessary for each language in a single theme data file or set of data files. Since all of the layouts are associated with a single theme, the theme can be re-applied automatically when the language or locale of the device is changed.

XML elements and attributes can be used within the device theme data file to both define the conditions and provide the ability to selectively apply the elements of the theme. Properties can be defined using either a <property> element or a <condition> element. The <property> element can be used to define a property with a string value, while the <condition> element is used to evaluate and set a property based on the logic contained in its children. The children of the condition element can be logical operations that allow properties and their values to be compared against each other and against system variables such as the current language.

To check a device variable, a unique name can be given to each device variable within the device theme data file that can be evaluated. The variable name can be, for example, prefaced by "${" and suffixed by "}" to indicate that it is a device variable name.

To provide a selection mechanism for the different parts of the theme, each element of the theme can optionally include either an "if" or "unless" attribute. The value of the attribute can be the name of a property. If the "if" attribute is specified, then the element is only used if the named property is set. The "unless" attribute is the reverse, and if specified then the element is only used if the named property is not specified. If neither "if" nor "unless" is specified then that element is always used in the theme.

An "ifthenelse" child of the condition node can also be used in the device theme data file. The "ifthenelse" child allows the prescription of three conditions. If the first condition evaluates to true, then the second condition may be evaluated and the condition element enclosing the "ifthenelse" element is resolved to the result of the second condition. If the first condition resolves to false, then the third condition is evaluated and condition element enclosing the "ifthenelse" element is resolved to the result of the third condition. This is useful for building more complex logical structures within the device theme data file.

### BRIEF DESCRIPTION OF THE DRAWINGS

Embodiments, offered by way of example only, will now be discussed with reference to the attached Figures in which:

Figure 1 is a schematic representation of a system for storing and managing data records containing a device theme;

Figure 2 is a schematic representation of the electronic device of Figure 1;

Figure 3 is a schematic representation of the theme file data stored on the electronic device of Figure 2;

Figure 4 is a flowchart depicting a method of management of data files containing a device theme;

Figure 5 is a schematic representation of portions of the device of Figure 2 showing part of the performance of the method of Figure 4;

Figure 6 is a schematic representation of portions of the device of Figure 2 showing part of the performance of the method of Figure 4;

Figure 7 is a schematic representation of the theme file data stored on the electronic device of Figure 2 in an alternative embodiment.

### DESCRIPTION OF PREFERRED EMBODIMENTS

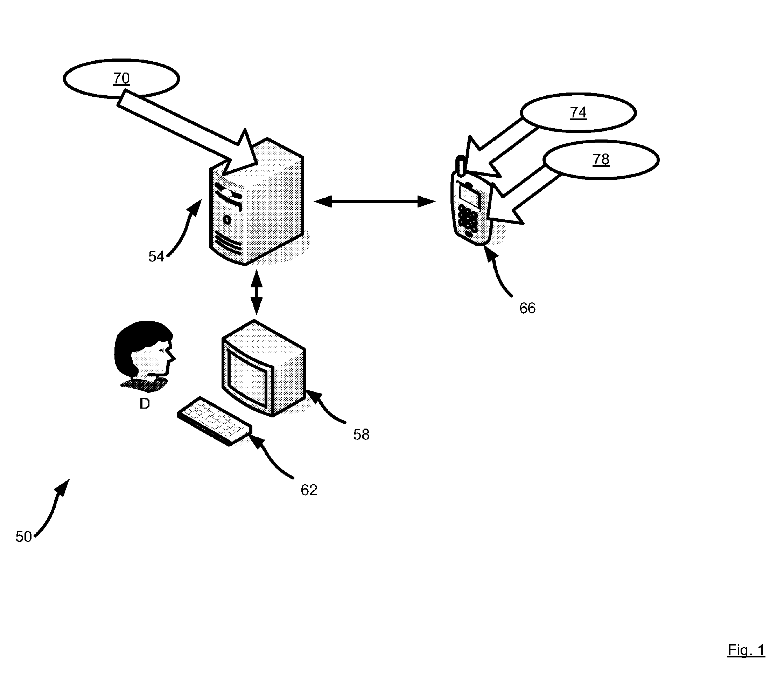

Referring now to Figure 1, a system for storing and managing data records containing a device theme is indicated generally at 50. System 50 includes a tower 54 coupled to a display 58, a keyboard 62 and a computing device 66. A development environment (DE) 70 executes on tower 54. A developer D using display 58 and keyboard 62 can interact with DE 70 executing tower 54 in order to develop a device theme data file 74 for generating a theme on device 66 using a theme generation application 78, particularly for use when device 66 is disconnected from tower 54. As will become more apparent from the discussion further below, the term "develop" is used in a non-limiting sense, to refer to any exercise related to the creation and/or modification and/or the like of device theme data file 74.

Tower 54 houses at least one central processing unit, random access memory (or other volatile storage), read only memory and hard disc storage (or other non-volatile storage) all of which are interconnected by a bus. The computing environment of tower 54 renders tower 54 operable to execute DE 70. DE 70 executes on the central processing unit of tower 54, making appropriate and/or necessary use of other components within tower 54, and receiving instructions from developer D via keyboard 62 and generating responses for developer D on display 58. Other types of input peripherals, in addition to or in lieu of keyboard 62 are contemplated. Likewise, other types of output peripherals, in addition to or in lieu of display 58 are contemplated.

Computing device 66 is a portable wireless email telephony device, but it should be understood that in other example embodiments computing device 66 can be any type of computing environment for which developer D may be called upon to develop device theme data file 74 using DE 70. While device theme data file 74 is discussed herein as being a file, note that device theme data file 74 can be any software object or plurality thereof or the like can be used by theme generation application 78 in order to generate a theme on the display of computing device 66.

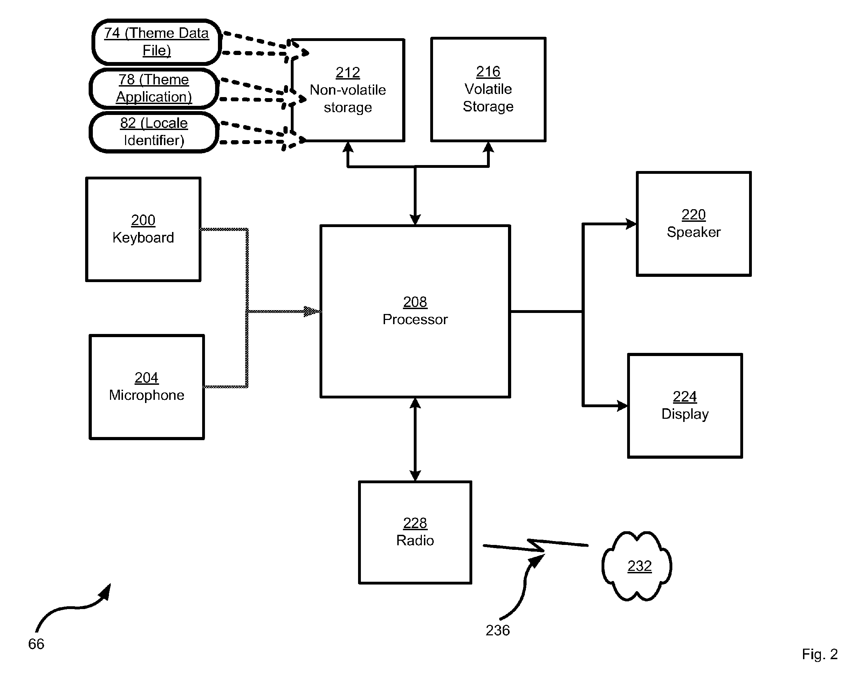

Referring now to Figure 2, a schematic block diagram shows computing device 66 in greater detail. It should be emphasized that the structure in Figure 2 is purely exemplary, and contemplates a device that be used for both wireless voice (e.g. telephony) and wireless data (e.g. email, web browsing, text) communications. Computing device 66 includes a plurality of input devices which in a present embodiment includes a keyboard 200 and a microphone 204. Other input devices, such as a touch screen, and camera are also contemplated. Input from keyboard 200 and microphone 204 is received at a processor 208, which in turn communicates with a non-volatile storage unit 212 (e.g. read only memory ("ROM"), Erasable Electronic Programmable Read Only Memory ("EEPROM"), Flash Memory) and a volatile storage unit 216 (e.g. random access memory ("RAM"). Computing device 66 also comprises a plurality of output devices including a speaker 220 and a display 224 that are also connected to processor 208. Processor 208 can be configured to control speaker 220 and display 224 to generate output using either or both. Computing device 66 also comprises a radio 228 which operates as a network interface to permit device 66 to communicate over a network 232 via a link 236. Any type of network 232 or link 236 is contemplated.

Programming instructions that implement the functional teachings of computing device 66 as described herein are typically maintained, persistently, in non-volatile storage unit 212 and used by processor 208 which makes appropriate utilization of volatile storage 216 during the execution of such programming instructions. Of particular note is that non-volatile storage unit 212 persistently maintains device theme data file 74 and theme generation application 78. Theme generation application 78 can be executed on processor 208 making use of volatile storage 216 as appropriate, in order to generate a theme on display 224. Non-volatile storage unit 212 also persistently maintains a locale identifier 82 which can be set to identify various languages or other preferences. Various other applications (not shown) are maintained in non-volatile storage unit 212 according to the desired configuration and functioning of computing device 66.

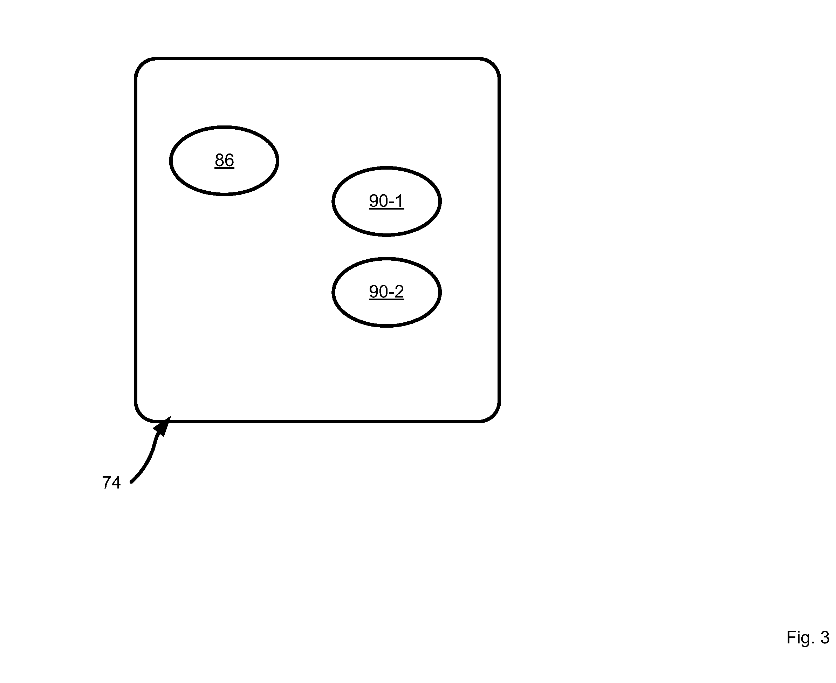

Referring now to Figure 3, an example of a theme data file 74 is shown in greater detail. Theme data file 74 comprises a set of conditional definitions 86 and a first set of theme elements 90-1 and a second set of theme elements 90-2 (Collectively, theme elements 90 and generically, theme element 90). Conditional definitions 86 comprise conditional associations between locales as defined within locale identifier 82 and theme elements 90. Theme elements 90 contain the features that comprise a particular theme. More particularly, theme elements 90-1 are associated with one particular locale while theme elements 90-2 are associated with a second particular locale. As will be discussed further below, in a specific example used for purposes of explanation, it will be assumed that elements 90-1 are associated with a Spanish locale setting and elements 90-2 are associated with an English locale setting.

It is to be understood that the structure of theme data file 74 is purely exemplary, and is simplified for purposes of explanation. For example, only two sets of theme elements 90 are shown, yet theme data file 74 can comprise any number of sets of theme elements. Furthermore, it is contemplated that additional sets of common theme elements can be provided within data file that are not unique to any particular locale but are in fact common to all locales. For such common sets of theme elements, conditional definitions 86 can be structured to point to such common sets of theme elements for all locales while pointing to unique theme elements 90 for individually selected locales.

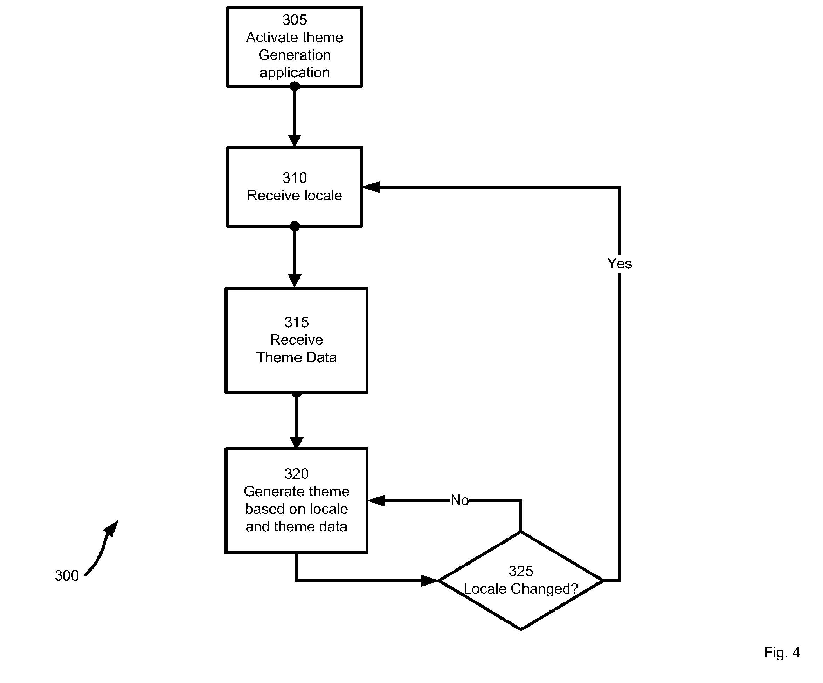

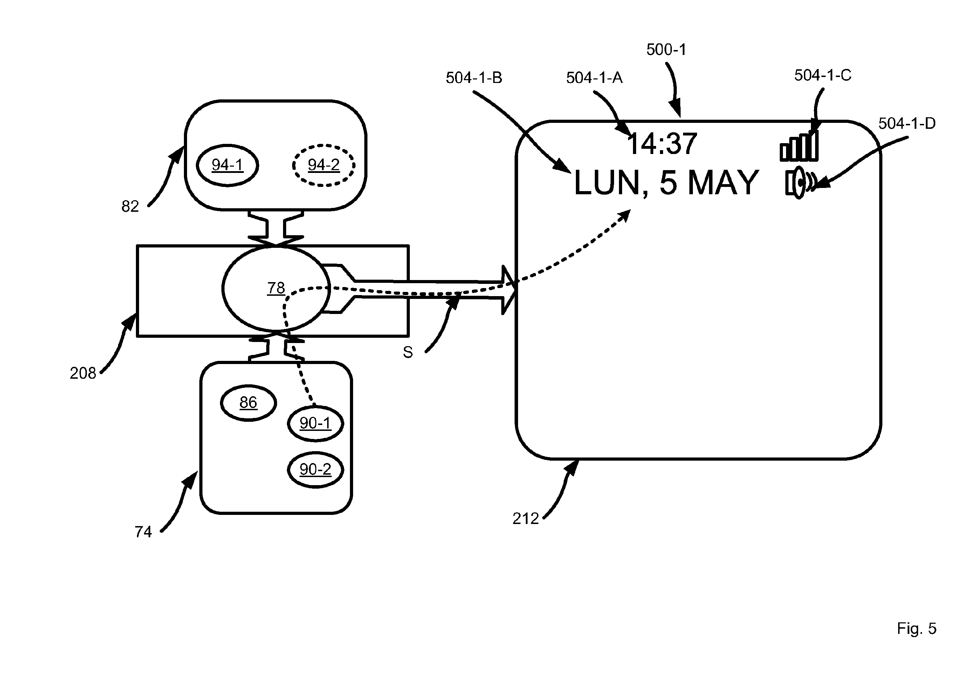

Referring now to Figure 4, a flow-chart depicting a method of management of one or more data files containing a device theme is indicated generally at 300. Method 300 can be implemented used device 66 and the following discussion will assume that method 300 is implemented using device 66, but it should be understood that method 300 or device 66 can be modified. At block 305 a theme generation application is activated. On device 66, block 305 is effected by processor 208 loading theme generation application 78 onto processor 208 and then executing theme generation application 78, making appropriate use of volatile storage 216. Block 305 is represented in Figure 5 as theme generation application 78 is represented as executing on processor 208.

Block 310 comprises receiving a locale. Block 310 is effected on device 66 by theme generation application 78 accessing locale identifier 82, to establish the current locale setting that is active in locale identifier 82. Figure 5 also provides a representation of block 310, wherein locale identifier 82 is shown as containing two different locale settings 94-1 and 94-2. Locale setting 94-1 is represented as being active due to the fact it is rendered within a solid oval, whereas locale setting 94-2 is represented as being inactive due to the fact it is rendered within a dashed oval. In this example, locale setting 94-1 represents Spanish, while locale setting 94-2 represents English.

Referring again to Figure 4, block 315 comprises receiving theme data. Block 315 is effected on device 66 by theme generation application 78 accessing theme data file 74. Figure 5 also provides a representation of block 315, wherein theme generation application 78 is shown as accessing the data file 74.

Referring again to Figure 4, block 320 comprises generating a theme based on locale and theme data. Block 320 is represented in Figure 5 by arrow S, wherein elements 90-1 are shown as being processed by theme generation application 78 and processor 208 is shown controlling display 212 so as to generate a Spanish theme 500-1 on display 212. Note that theme 500-1 shows exemplary graphical elements 504 in the form of time 504-1-A shown as as "14:37" in twenty-four hour time, and indicates a date 504-1-B in the form of "LUN, 5 MAY" consistent with a Spanish representation of the time and date. Theme 500-1 also includes a signal strength icon 504-1-C above a speaker icon 504-1-D. The signal strength icon 504-1-C represents the strength of link 236, while the speaker icon 504-1-D indicates that speaker 220 is "on" and is not muted.

It should now be understood that as part of performance of block 320, then generation application 78 will access conditional definitions 86 and compare those definitions 86 with the active locale setting 94-1, to determine that elements 90-1 are to be used to generate theme 500-1. Elements 90-1 thus include programming instructions for theme application 78 corresponding to the specific location, size and orientation of elements 504-1. In other words, the specific appearance of theme 500-1 corresponds to programming instructions within element 90-1, and element 90-1 is activated due to the fact that locale setting 94-1 is active.

Referring again to Figure 4, block 325 comprises determining whether the active locale setting has changed. If it has not changed, method 300 cycles back to block 320 and the theme is generated without change. Thus, continuing with the specific example, locale setting 94-1 remains active, then so too will theme 500-1.

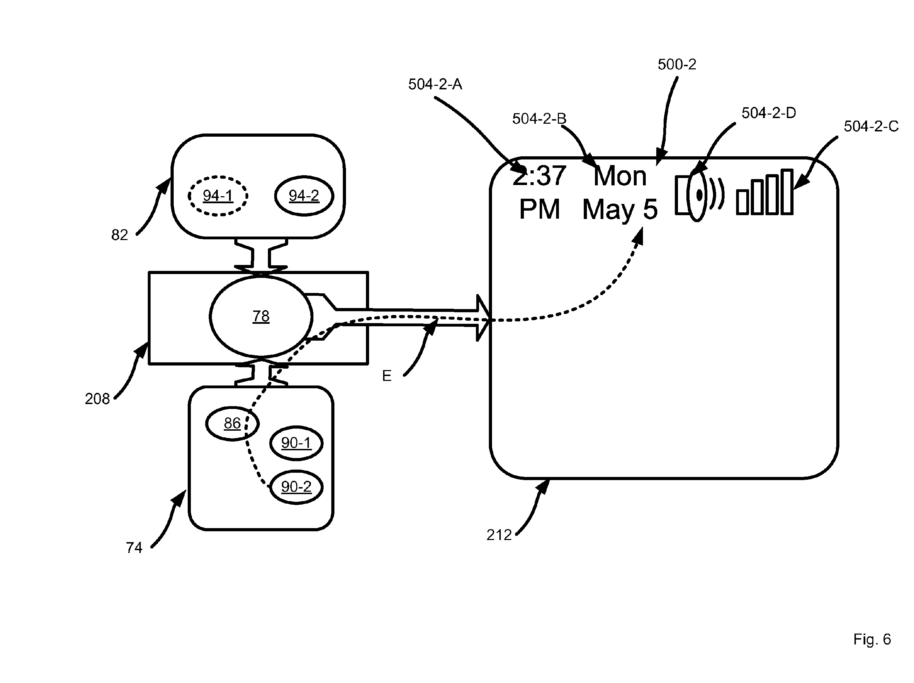

However, if at block 325 it is determined that "yes", the locale has changed, then method 300 cycles back to block 310 where the new locale is received and blocks 315 and 320 are performed again. Figure 6 shows an example where the active locale setting is changed from locale setting 94-1 (i.e. Spanish) to locale setting 94-2 (i.e. English). During this next pass through block 320, an arrow E is shown, wherein elements 90-2 are shown as being processed by theme generation application 78 and processor 208 is shown controlling display 212 so as to generate an English theme 500-2 on display 212. Note that theme 500-2 also shows exemplary graphical elements 504 in the form of time 504-2-A shown as as "2:37 PM" in twelve-hour format, and indicates a date 504-2-B in the form of "MON MAY 5" consistent with an English representation of the time and date. Theme 500-2 also includes a signal strength icon 504-2-C to the right of a speaker icon 504-1-D. The signal strength icon 504-1-C represents the strength of link 236, while the speaker icon 504-1-D indicates that speaker 220 is "on" and is not muted.

Elements 90-2 thus include programming instructions for theme application 78 corresponding to the specific location, size and orientation of elements 504-2. In other words, the specific appearance of theme 500-2 corresponds to programming instructions within element 90-2, and element 90-2 is activated due to the fact that locale setting 94-2 is active.

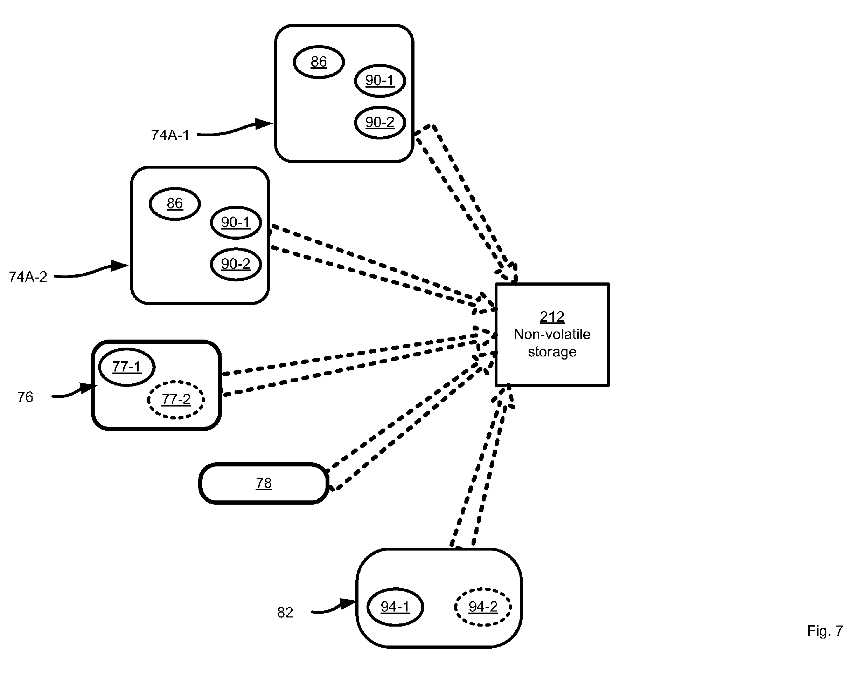

Having described method 300, it should now be understood that variations are contemplated. Figure 7 shows one example of a variation of the foregoing embodiments. In Figure 7, for convenience, non-volatile storage 212 is shown in isolation of the remainder of device 66. In Figure 7, non-volatile storage 212 maintains a plurality of theme data files 74A-1 and 74A-2 instead of just a single theme data file 74. Each theme data file 74A-1 and 74A-2 represents a different theme. For example, theme data file 74A-1 may be based on one set of fonts and font sizes, and one set of icons and icon colours, whereas theme data file 74A-2 may be based on another set of fonts and font sizes, and another set of icons and icon colours. Yet, each theme data file 74A-1 and 74A-2 maintains its own conditional definitions 86 and elements 90. Also in Figure 7, non-volatile storage 212 also maintains a theme identifier 76 which contains a first theme setting 77-1 and a second theme setting 77-2. Theme setting 77-1 corresponds to theme data file 74A-1, while theme setting 77-2 corresponds to theme data file 74A-2. In the Figure 7 example, theme setting 77-1 is shown as active, indicating that theme data file 74A-1 is to be used by theme generation application 78. Thus, it will now be apparent that method 300 can be modified to include a determination of which theme data file 74A is active.

Referring back now to Figure 1, it will now be understood that development environment 70 can be used to create or edit theme data file 74, or theme data file 74A-1 or theme data file 74A-2 or additional themes. During such creation or editing, a single theme 500 can be managed for all locale settings 94. Likewise, theme identifier 76 can be updated to reflect a list of different theme settings 77, without having to specify an individual locale for each of those settings 77. In other words, theme settings 77 need not include a separate theme data file 74 for each locale setting 94.

As a still further variation, while block 310 of method 300 contemplates receiving a locale, and block 320 contemplates generating a theme based on locale and theme data, in other embodiments, it is contemplated that other properties, in addition to or in lieu of locale could be implemented at block 310 and block 320. For example, such properties include screen size, software version etc.

Other variations are also contemplated. The following code-snippet (that could be included in, for example, theme data section 90) shows portions of a theme data file 74 that illustrate one such variation.

```
 <attribute-set name="homescreen" if="LOCALE_EN">
               <layout src="homescreen_A.pme"/>
 <background color="white">
 <image src="background_homescreen.png"/>
           </background>
 </attribute-set>
 <attribute-set name="homescreen" unless="LOCALE_EN">
               <layout src="homescreen.pme"/>
 <background color="white">
 <image src="background_homescreen.png"/>
           </background>
 </attribute-set>
```

In the foregoing code-snippet, the first attribute set element will only be applied is the LOCALE_EN property is set, LOCALE_EN identifies a particular locale setting. If LOCALE_EN is not set, the first attribute set element will be skipped. The second attribute set element is the reverse of the first. If LOCALE_EN property is set, then the second attribute set element will be skipped. If the LOCALE_EN property is not set, then the second attribute set element will be parsed.

The following code-snippet (that could be included in conditional definitions 86) shows portions of a theme data file 74 that illustrate another variation, whereby conditions are defined based on the default system locale properties

```
 <condition property="LOCALE_EN">
                    <equals arg1="${locale.default.system.language}" arg2="en"/>
 </condition>
           <condition property="LOCALE_ES">
           <equals arg1 ="${locale.default.system.language}" arg2="es"/>
 </condition>
           <condition property="OTHER_LOCALE">
       <not>
                       <or>
                       <isset property="LOCALE_EN"/>
                                    <isset property="LOCALE_ES"/>
                             </or>
               </not>
 </condition>
```

The above code-snippet defines three conditions which will result in one and only one property being defined:

1) If the system language is English then the LOCALE_EN property will be set.

2) If the system language is Spanish then the LOCALE_ES property will be set.

3) If the system language is neither English nor Spanish then the OTHER_LOCALE property will be set.

In general, it will now be understood that variations, combinations and subsets of the foregoing embodiments are contemplated.

## Claims

1. A method for managing a data file containing a device theme for a device comprising:
providing a plurality of theme data files each corresponding to a different device theme;
receiving data representing an active one of a plurality of property settings in said device;
receiving theme data corresponding to one of said theme data files; said theme data comprising conditional definitions corresponding to one or more of said property settings; said theme data further comprising theme elements corresponding to said property settings;
selecting theme elements from said theme data based on said conditional definitions and said data representing said active one of said property settings; and,
generating a theme respective to said selected data file on a display of said device based on said selected theme elements.

2. The method of claim 1 wherein said theme elements comprise text data and/or icon data.

3. The method of claim 2 wherein said text data comprises time and/or date.

4. The method of claim 2 wherein said icon data comprises a signal strength indicator.

5. The method of any one of claims 1 to 4 further comprising determining if said active one of a plurality of property settings has changed and thereafter repeating said receiving said data, receiving said theme data, selecting said theme elements and generating said theme.

6. The method of any one of claims 1 to 5 further comprising determining if said one of said theme data files has changed and thereafter repeating said receiving said data, receiving said theme data, selecting said theme elements and generating said theme corresponding to said one of said theme data files.

7. The method of any one of claims 1 to 6 wherein said property settings are based on a locale and/or a font size.

8. The method of any one of claims 1 to 8 wherein said theme data specify one or more of a location, size and orientation of each of said theme elements.

9. An electronic device comprising:
non-volatile storage device configured to store programming instructions; and
a processor connected to said non-volatile storage device; said processor configured to execute said programming instructions to cause said electronic device to implement the steps of the method of any one of claims 1 to 8.

10. A memory device storing programming instructions executable by a processor of an electronic device whereby, when executed, said programming instructions cause said electronic device to implement the steps of the method of any one of claims 1 to 8.
